# EUROPEAN PATENT APPLICATION

(11) **EP 3 336 984 A1**
(43) Date of publication of application: **20.06.2018**
(21) Application number: 16203768.3
(22) Date of filing: 13.12.2016
(51) Int. Cl.: H02B 1/22, H02B 13/035, H02B 1/24

(54) **MEDIUM VOLTAGE SWITCHGEAR WITH DOUBLE BUSBAR SECTIONALIZER**

(71) Applicant: ABB Schweiz AG, 5400 Baden (CH)
(72) Inventor: Claus, Oliver, 40885 Ratingen (DE)
(74) Representative: Schmidt, Karl Michael

(57) **Abstract**

The invention relates to a medium voltage switchgear with double busbar sectionalizer, wherein busbar couplers and busbar risers are arranged in panels of the switchgear, according to the preamble of claim 1. In order to reduce the needed space for implementation of all needed components, and to reduce as well the number of needed panels, the invention is that the two busbar risers (R1, R2) for the two busbars (BB1, BB2) are arranged in one common riser panel (10) but in separated gas compartments.

## Description

The invention relates to a medium voltage switchgear with double busbar sectionalizer, wherein busbar couplers and busbar risers are arranged in panels of the switchgear, according to the preamble of claim 1.

For an operation of a double bus bar (DBB) medium voltage switchgear, consisting of several panels, from time to time a longitudinal bus separation of each bus bar system is required. Well known are systems in which two panels, a coupler and raiser panel, are applied for each bus bar system. Thereby the coupling panel (coupler) consists of three gas compartments, two busbar compartments for the first busbar and for the second busbar, as well as a circuit breaker compartment. That means, four panels are needed for the realization of a double busbar longitudinal bus separation in several cases. All gas compartments are filled by an isolating gas.

Several solutions are known in the state of the art.

Solutions with less than four panels are also available on the market.

Further solutions are well known, using three panels. But for the riser panel a common gas compartment is used. This is from technical point of view against the double busbar philosophy to keep both busbars completely independent. If there would be a problem in this compartment, it will effect both busbar systems.

Furthermore, a system is known, in which for each busbar system the coupler and riser functionality is in one panel per busbar system. This is done in that way, that the busbar compartment only uses half of the panel width. This is a very compact solution. The disadvantage is, that the coupler and riser are not independent. If there is a technical problem with the coupler, for example a defect circuit breaker, and the panel needs to be replaced, the riser needs to be replaced too. This will make it impossible, to continue to operate one side of the effected busbar system. If coupler and riser are in separate panels, only the side with the technical problem cannot be used.

Compared to the existing solution of competitors at the market the disadvantages are:
- Major required space
- higher number of panels
- higher costs
- non competitive solution
- larger size of switchgear building

Under this consideration, the object of the invention is, to reduce the needed space for implementation of all needed components, and to reduce as well the number of needed panels.

In order to solve the a.m. problems by realizing as well a high technical performance, the invention comprises a multi-panel longitudinal bus separation for a gas insulated switchgear double busbar system described as three-panel solution with a special riser panel as variant 1 and as two panel version with special riser- and special coupler panel as variant 2.

So the basical invention is, that the two busbar risers for the two busbars are arranged in one common riser panel but in separated gas compartments.

Fo a first variant, an advantageous embodiment is, that in a three-panel-solution, the two couplers for the two busbars, are arranged in separate coupler panels.

Fo a second variant, an advantageous embodiment is, that in a two-panel-solution, the two couplers for the two busbars, are arranged in a common coupler panel.

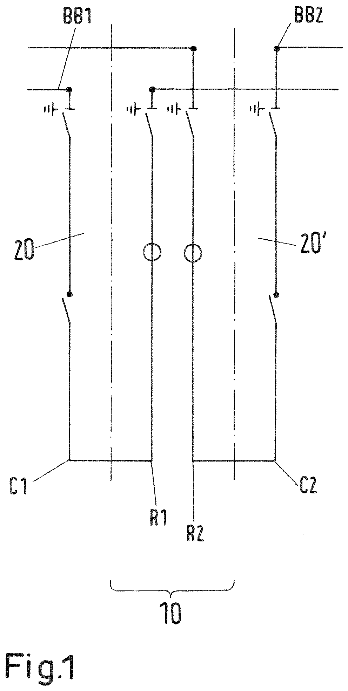

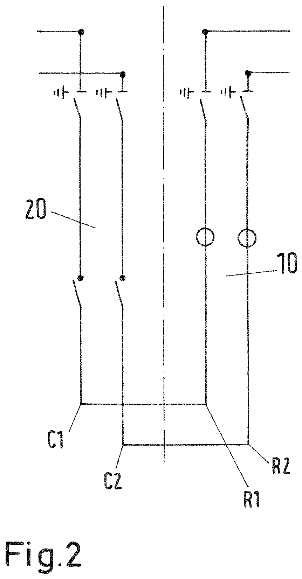

The invention is shown in two embodiments in the figure 1 and 2.

Figure 1 shows a three-panel-solution, wherein the two couplers C1, and C2 for the two busbars BB1, and BB2, are arranged in separate coupler panels.

So for the realization of a three-panel-switchgear, the so called sectionaliser is indicated by a coupler panel 20, 20' per each busbar system and one special riser panel 10 for both busbars BB1 and BB2.

The riser panel 10 comprises of two separate gas compartments, one for each busbar BB1 and BB2, where are located the busbar, a three-position switch, instrument transformers and connecting bars placed in. The gas compartement for the riser R1, in which the busbar BB1 is also located, and for the riser R2 in which the busbar BB2 is also located, are arranged in a row.

The riser panel 1 is furthermore provided with temperature sensor means, in order to observe the temperature inside the riser panel 10.

For cooling the space below the panel as well as the distance between and lateral of it is used.

The operation of the rear three-position switch of the riser panel 10 is performed from the front side or alternatively from the back. For an operation from the front, the design of the gas compartment is formed in such a way, that a mechanical power transmission from front to back is aimed.

For realization of a two-panel-switchgear, like shown in figure 2, the sectionaliser is indicated by one special coupler panel 20 and one special riser panel 10 for both busbars, BB1 and BB2. The riser panel 10 comprises four gas compartments, one busbar compartment and one circuit breaker compartment per busbar system. Busbar system BB1 and BB2 are laterally reversed. The manual operation of the circuit breaker, and the three-position switch for busbar BB2 is done on the rear side.

The riser panel 10 comprises of two separate gas compartments, one for each busbar-system, where are the busbar, three-position switch, instrument transformers and connecting bars placed in. The gas compartment for riser R1 for the busbar BB1, and the riser R2 for the busbar BB2, are arranged in a row.

For the pressure relief concept of the switchgear, a pressure relief is applied to execute the depressurizing of the circuit breaker compartment into the base frame and then to the pressure relief duct at the rear side of the riser panel. A depressurizing of the riser panel is carried out either to the pressure relief duct on top or underneath.

### List of reference signs

- 10: riser panel
- 20, 20': coupler panel
- BB1: Busbar 1, (first busbar)
- BB2: Busbar 2, (second busbar)
- C1: Coupler 1, (first coupler)
- C2: Coupler 2, (second coupler)
- R1: Riser 1, (first riser)
- R2: Riser 2, (second riser)

## Claims

1. Medium voltage switchgear with double busbar sectionalizer, wherein busbar couplers and busbar risers are arranged in panels of the switchgear,
**characterized in**
**that** the two busbar risers (R1, R2) for the two busbars (BB1, BB2) are arranged in one common riser panel (10) but in separated gas compartments.

2. Medium voltage switchgear according to claim 1,
**characterized in**
**that** in a three-panel-solution, the two couplers (C1, C2) for the two busbars (BB1, BB2), are arranged in separate coupler panels.

3. Medium voltage switchgear according to claim 1,
**characterized in**
**that** in a two-panel-solution, the two couplers (C1, C2) for the two busbars (BB1, BB2), are arranged in a common coupler panel.
